# EUROPEAN PATENT SPECIFICATION

(11) **EP 0 437 964 B1**
(45) Date of publication and mention of the grant of the patent: **06.09.1995**
(21) Application number: 90314068.9
(22) Date of filing: 20.12.1990
(51) Int. Cl.: B60J 10/08

(54) **Edge trim and method of fitting**
Kantenabdeckung und deren Einbauverfahren
Moulure de protection et procédé d'installation

(30) Priority: 20.12.1989 GB 8928802
(43) Date of publication of application: 24.07.1991
(73) Proprietor: SCHLEGEL (UK) HOLDINGS LIMITED, Seacroft Leeds, LS14 1LY (GB)
(72) Inventor: Cook, John Edward, Aslockton, Nottinghamshire, NG13 9AE (GB); Freeman, Anthony J., Ashby-de-la-Zouch, Leicestershire (GB); Ray, Michael James, Norton-Juxta-Twycross, CV9 9PT (GB)
(74) Representative: Carpmael, John William Maurice

(56) References cited:
- EP-A- 0 059 678
- EP-A- 0 117 747
- EP-A- 0 317 086
- FR-A- 2 540 212
- PATENT ABSTRACTS OF JAPAN vol. 8, no. 267 (M-343)(1704) 7 December 1984 & JP-A-59 140 145 (TOYOTA GOSEI) 11 August 1984

## Description

This invention relates to an edge trim for fitting to a flange around a door or door opening on a motor vehicle and to a method of fitting the edge trim. The invention is also applicable to weatherstrips mounted on or integral with such edge trims.

Edge trims for use in the motor industry are normally extruded from a synthetic resinous material and incorporate a metallic carrier therein, the carrier being of slotted metal construction or knitted zig-zag wire construction so as to impart rigidity and resilience to the edge trim. Very often, a pile or elastomeric seal is extruded with or attached to the edge trim. Normally, the edge trim either with or without a weatherstrip is supplied to the motor vehicle manufacturer in long reeled lengths ready for application to a flange around the door or boot or frame of the door or boot of a vehicle in a state ready to be fitted to the flange, i.e. such that it has a generally U-shaped cross-section, the internal configuration of the U being such that the edge trim can be applied to the flange relatively easily either manually or with a machine and will not subsequently become displaced from the flange.

There has always been a problem with the fitting of such U-shaped edge trims whether or not they incorporate a weatherstrip because of the manufacturing tolerances both of the edge trim and the motor vehicle itself. For example, the thickness of the metal carrier can vary slightly as can the thickness of the elastomeric material of the extrusion of the dimensions of any gripper fins provided on the inner surfaces of the U-shape. Furthermore, the flange to which the edge trim is fitted can have a thickness made up of one, two, or even more layers of sheet metal welded together with spot welds which themselves can change the thickness of the flange.

In practice, therefore, it is difficult for a fitter or a machine to apply a U-shaped edge trim to a flange in such a way that it will remain on the flange during the life of the vehicle. The problem of course is that for a single layer thickness of metal sheet, the internal dimensions of the U-shaped edge trim need to be considerably less than for that portion of the flange which is made up of say three layers of metal sheet. If the edge trim is pre-formed into its U-shape to accommodate all these different thicknesses, it is likely to be slightly too wide for single layer thicknesses and slightly too narrow for three or more layer thicknesses and as a result, the edge trim may not form a satisfactory grip where the flange is of one layer thickness, and where the flange is of more than two layer thickness it may be extremely difficult for the fitter or machine to apply the edge trim to the flange and as a result the edge trim is abused during fitting and does not perform satisfactorily in use.

For example, a water-tight seal is not always achieved when the trim is fitted onto the flange because channels are formed between the stepped layers and the trim, along which water can travel. In order to overcome this problem, a fitter sometimes applies a mastic to either the flange or the trim before fitting one to the other. The mastic seals the channels. This "pre-treating" step is time consuming and expensive and makes the trim almost impossible to remove subsequently.

If a known edge trim is to be retained securely on a flange, it is advisable that the trim has one or series of gripper fins located within the U-shape. The gripper fins allow the edge trim to be applied easily to a flange but hinder the displacement of a trim off the flange once the trim has been fitted onto the flange. This aspect is known as increasing the "pull-off" value.

However, apart from the aforementioned problems, further problems are associated with the known edge trims. Often a large force is required to fit the trim onto the flange because the flange has to deform the gripper fins (i.e. the trims have a large "push-on" value). Such a known edge trim is disclosed in EP-A-0117747. This has sponge rubber layers on the gripper fins, which tends to increase the "push-on" value.

EP-A-0317086 (Published on May 24^{th}, 1989) discloses an edge trim that overcomes the problems associated with the edge trims that are normally used in the motor industry. These trims take advantage of the ever increasing use of robotics in the manufacture of motor vehicles. In EP-A-0317086 there is disclosed a generally U-shaped edge trim having a series of traditional gripper fins. The arms of the U-shaped edge trim are, however, inclined at an angle of about 45° to each other. This is known as an open configuration. When the edge trim is applied to a flange it can subsequently be crimped or otherwise deformed into closed gripping engagement with the flange.

By using the open-arm configuration, the "push-on" values of the trims are very low. Moreover, once the edge trim has been crimped onto a flange, the "pull-off" value is extremely high.

However, it is an accepted fact that the manufacture of trims that include gripper fins (e.g. the known edge trims and the edge trims of EP-A-0317086) can be expensive. This is because the trims have to be extruded from complicated dies.

The present invention has been conceived not only to overcome the problems associated with the known edge trims but also to do away with the need for gripper fins and use any alternative gripping material which cannot be used with traditional U-shaped edge trims because it has too high a push-on value, i.e. it is impossible to fit the edge trim to a flange. It is known that there is a relationship between push-on and pull-off values, i.e. the higher the push-on value the higher the pull-off value, but for a very high pull-off value which is what the motor industry requires, the push-on value is too great to get the traditional edge trim, regardless of gripper fin design, onto the flange. The edge trim of this invention overcomes this problem. the present invention also obviates the need for a fitter to conduct a "pre-treating" step of applying a mastic to either a flange or a trim.

According to the present invention, we provide an edge trim for application to a flange such as is found on the edge of a door or around a door opening in a motor vehicle, comprising a strip defining a channel, which has a generally U-shaped cross-sectional shape but with the arms of the U-shape diverging from the base of the U, and being inclined to each other at an angle of between about 10° and about 90°, and a carrier incorporated at least partly within the strip (Edge trim of the type disclosed in EP-A-0 317 086), characterised in that a sponge or foam-like material extends over substantially the whole of the internal surface of the channel and is secured within the channel, such that at least part of a flange can be located within the channel and the edge trim can subsequently be crimped or otherwise deformed into gripping arrangement with the flange, with the surfaces of the flange being gripped by said sponge or foam-like material.

The carrier may be made of metal. Also, the strip may completely enclose the carrier. In a preferred embodiment, the carrier has indentations pointing towards the channel.

Preferably, the strip is formed of an extruded synthetic resinous material.

The trim may further comprise a fin along each edge of the channel that is dimensioned to retain the sponge or foam-like material within the channel.

Preferably, the arms are inclined at an angle of about 45°.

The sponge or foam-like material can be a hot melt foam material or it can be an EPDM sponge.

According to the present invention, we also provide a method of fitting an edge trim as described above to a flange, such as is found on the edge of a door or around a door opening in a motor vehicle, comprising the steps of forming the channel of the edge trim into a first, opened out condition, presenting the channel of the edge trim in this first condition to the flange, until the channel loosely engages the flange and subsequently deforming the edge trim into a second closed condition in which the sponge or foam-like material on its inner surface grips the flange.

Preferably, the method further includes the step of sensing the thickness of the flange and applying a deforming step on the edge trim so that the edge trim will grip the flange uniformly throughout its length regardless of the thickness of the flange.

Advantageously, a predetermined crimping force is applied to the edge trim to deform it into its second condition, regardless of the thickness of the flange.

Furthermore, the edge trim can be deformed by means of a robot. For example, crimping means, such as a plurality of crimping rollers, supported on a robot arm.

The present invention therefore provides an edge trim that is easy and cheap to manufacture and one that is also easy to secure to a flange around a door opening or on a door or the like, and which is difficult to remove from the flange.

The invention is now described by way of example with reference to the accompanying drawings, in which:-
FIGURE 1 is a sectional view of one edge trim according to the present invention;
FIGURE 2 is a sectional view of a second edge trim according to the present invention;
FIGURE 3 is a sectional view of the second edge trim when crimped on one type of flange;
FIGURE 4 is a sectional view of a third edge trim according to the present invention;
FIGURE 5 is a sectional view of the second edge trim when about to be crimped on a second type of flange; and
FIGURE 6 shows the edge trim of any one of Figures 1-5 being applied to a flange and subsequently being deformed into gripping engagement therewith with the aid of a robot arm.

Referring to the drawings, each edge trim 1 has a metallic carrier 3, e.g. of zig-zag wire or slotted or stamped metal incorporated within a strip 5. The metallic carrier 3 is shown in simplified form in the drawings. The strip 5 is extruded from a known thermoplastic or thermosetting resinous material, such as polyethylene. The strip 5 is of open U-shaped form and defines a channel 11 having walls or arms 7a, 7b.

A sponge or foam-like material 9 (such as EPDM sponge or a hot-melt foam) is secured to the channel walls 7a, 7b. This may be extruded with strip 5, or combined with the strip in a separate operation. The sponge or foam-like material 9 may be retained within the channel 11 by means of fins 19 which extend along each arm 7a, 7b of the trim. However, these need not be provided.

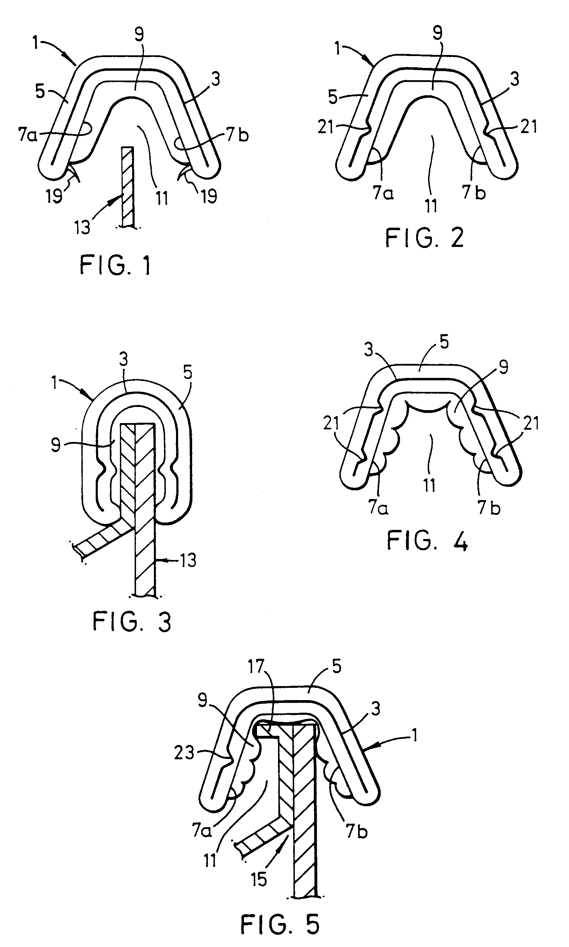

The channel walls are inclined to each other at an angle of approximately 45°. When the walls are in this first open condition, the trim can receive at least part of a flange 13 as shown in Figure 3. The flange 13 comprises two layers of metal welded together but could be of single layer, or more than two layer thickness. Another typical flange 15 is shown in Figure 5, with one of the two layers of metal having an up-turned edge portion 17.

To secure an edge trim according to the present invention to a flange, the edge trim 1 while in the open position is first placed over the flange such as shown in Figure 5. The strip 5 is then crimped or deformed so that the material 9 closes in around the flange 13, so that the flange 13 is held secure within the confines of the material 9 (such as shown in Figure 3). When the trim is crimped onto the flange a large amount of force is needed to remove the trim from the flange (i.e. the flange has a high pull-off value). The trim is held in place by means of the carrier 3.

It is clear from the above description that, because the material 9 is compressible, the strip 5 can be 'overbent' to increase the pull-off value.

The pull-off value can be increased in several other ways. For example, the carrier 3 can be provided with one or more indentations 21 that point towards the channel walls 7a, 7b, so that when the trim is crimped onto a flange, the force of the carrier 3 is concentrated at the indentations 21. (see figure 2 or figure 4).

Alternatively, the carrier 3 can be provided with a single indentation 23 that is adapted to fit under an up-turned edge 17 of a flange, such as flange 15, when the trim is crimped onto the flange. In other words, the indentation 23 and the edge 17 lock together, as shown in figure 5.

In all of the above constructions, the strip 5 can be provided with fins 19 at the ends of the channel walls 7a, 7b. Fins 19 not only prevent the displacement of the sponge/foam material 9 from within the confines of the trim, while the trim is being crimped onto a flange, but also provide a moisture seal to prevent rusting of the flange.

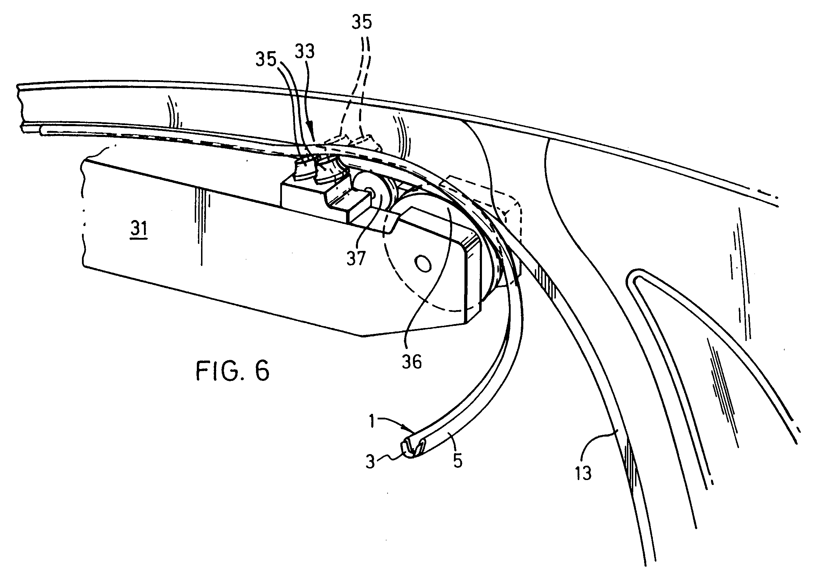

The trim according to the present invention has been specially designed to take advantage of the ever increasing use of robotics in the manufacture of motor vehicle. In this regard, the trim can be fitted to vehicle flange by means of a suitable robotic apparatus, such as that shown in Figure 6.

The apparatus shown in Figure 6 includes a robot arm 31, on which a closing assembly 33 is mounted, the closing assembly incorporating two pairs of bevelled crimping rollers 35, at least one guide roller 36 and a tensioning roller 37, and some form of sensing device (not shown) to ensure that the crimping rollers deform the channel walls 7a, 7b of the edge trim so that the edge trim grips the flange uniformly regardless of the thickness of the flange. This may either sense flange thickness and cause crimping by the appropriate amount, or ensure a uniform crimping force of the edge trim on the flange.

It will of course be appreciated that the edge trim could have many other constructions from these illustrated; for example, it can have a weatherstrip or seal attached to or integral therewith. Instead of having an extruded synthetic, resinous body, the body could be formed of textile material wrapped around a carrier. Many other constructions are possible.

Figures 1, 2 and 4 show the channel walls 7a, 7b of the edge trim inclined to each other at an angle of about 45°, this being the preferred angle, and the state in which it is envisaged the manufacturer of the edge trim would supply it to the car manufacturer. It will be appreciated, however, that other angles would be possible although ideally the angle should be somewhere between a few degrees and 90°.

It is even envisaged that the edge trim could be supplied to the motor manufacturer in flat form and the manufacturer could then either apply the edge trim to the flange and crimp it up to the construction shown in Figure 3 in a single operation or initially deform the edge trim to a condition similar to that shown in Figures 1, 2 and 4 and then apply it to the flange and subsequently deform it again to the condition shown in Figure 3.

It will also be appreciated that the method and apparatus for deforming the edge trim illustrated in figure 6 is only one example of many different methods and apparatus which could be used.

It will of course be appreciated that while the present invention has been specifically conceived for edge trims for use in the motor industry, it could be used for edge trims having other uses.

The advantage of the present invention is that it solves a problem which motor manufacturers in particular have suffered from for many years, namely, the satisfactory fitting of an edge trim or weatherstrip on to a flange of variable thickness on a vehicle. In particular, the trim must be easy to fit, but difficult to remove. This is possible with the trims described above. Furthermore, it is possible to ensure that the trim, with or without weatherstrip, can be fitted with a uniform grip on a flange regardless of the dimensions of the flange and without the need for gripper fins.

It will of course be understood that the present invention has been described above purely by way of example, and modifications of detail can be made within the scope of the invention, as defined in the claims.

## Claims

1. An edge trim (1) for application to a flange (13) such as is found on the edge of a door or around a door opening in a motor vehicle, comprising a strip (5) defining a channel (11) which has a generally U-shaped cross-sectional shape but with the arms (7a, 7b) of the U-shape diverging from the base of the U, and being inclined to each other at an angle of between about 10° and about 90°, and a carrier (3) incorporated at least partly within the strip, characterised in that a sponge or foam-like material (9) extends over substantially the whole of the internal surface of the channel (11) and is secured within the channel (11), such that at least part of a flange (13) can be located within the channel (11) and the edge trim (1) can subsequently be crimped or otherwise deformed into gripping arrangement with the flange (13), with the surfaces of the flange being gripped by said sponge or foam-like material (9).

2. An edge trim according to claim 1, wherein the arms (7a, 7b) are inclined to each other at an angle between 40° and 50°.

3. An edge trim according to claim 1 or 2, wherein the trim (1) further comprises a fin (19) along each edge of the channel which is dimensioned to retain the sponge or foam-like material within the channel.

4. An edge trim according to any one of the preceding claims, wherein the carrier (3) has at least one indentation (21) pointing towards the channel (11).

5. An edge trim according to any one of the preceding claims, wherein the strip is formed of an extruded synthetic resinous material.

6. An edge trim according to any one of the preceding claims, wherein the strip completely encloses the carrier and wherein the carrier is made of metal.

7. An edge trim according to any one of the preceding claims, wherein the sponge or foam-like material is a hot melt foam.

8. An edge trim according to any one of claims 1-7, wherein the sponge or foam-like material is an EPDM sponge.

9. A method of fitting to a flange an edge trim (1) according to any one of claims 1-8 comprising the steps of forming the channel (11) of the edge trim into a first, opened out condition, presenting the channel (11) of the edge trim in this first condition to the flange (13), such as is found on the edge of a door or around a door opening in a motor vehicle until the channel (11) loosely engages the flange (13) and subsequently deforming the edge trim into a second closed condition in which the sponge or foam-like material on its inner surface grips the flange (13).

10. A method according to claim 9 which includes the step of sensing the thickness of the flange and applying a deforming step on the edge trim so that the edge trim will grip the flange uniformly throughout its length regardless of the thickness of the flange.

11. A method according to claim 9 or 10 wherein a predetermined crimping force is applied to the edge trim to deform it into its second condition, regardless of the thickness of the flange.

12. A method according to any one of claims 9 to 11 wherein the edge trim is deformed by means of a plurality of crimping rollers (35,36) supported on a robot arm (31).

## Patentansprüche

1. Kantenverkleidung (1) zum Anbringen an einem Flansch (13), wie er an den Kanten einer Tür oder um eine Türöffnung in einem Kraftfahrzeug zu finden ist, die einen Streifen (5) aufweist, der einen Kanal (11) begrenzt, der eine allgemein U-förmige Querschnittsform aufweist, wobei jedoch die Arme (7a, 7b) der U-Form ausgehend von der Basis des U auseinanderstreben und zueinander unter einem Winkel von zwischen etwa 10° und etwa 90° geneigt sind, und die einen Träger (3) aufweist, der wenigstens teilweise in dem Streifen eingeschlossen ist, dadurch gekennzeichnet, daß ein schwamm- oder schaumartiges Material (9) sich im wesentlichen über die gesamte innere Oberfläche des Kanals (11) erstreckt und innerhalb des Kanals (11) befestigt ist, derart, daß wenigstens ein Teil eines Flansches (13) innerhalb des Kanals (11) lokalisiert werden kann und die Kantenverkleidung (1) anschließend in klemmenden Eingriff mit dem Flansch (13) gebördelt oder in anderer Weise verformt werden kann, wobei die Oberflächen des Flansches von dem schwamm- oder schaumartigen Material (9) eingeklemmt werden.

2. Kantenverkleidung nach Anspruch 1, wobei die Arme (7a, 7b) zueinander unter einem Winkel zwischen 40° und 50° geneigt sind.

3. Kantenverkleidung nach Anspruch 1 oder 2, wobei die Verkleidung (1) weiter eine Flosse (19) entlang jeder Kante des Kanals aufweist, die so dimensioniert ist, daß sie das schwamm- oder schaumartige Material innerhalb des Kanals festhält.

4. Kantenverkleidung nach einem der vorhergehenden Ansprüche, wobei der Träger (3) wenigstens eine Einkerbung (21) aufweist, die in Richtung des Kanals (11) zeigt.

5. Kantenverkleidung nach einem der vorhergehenden Ansprüche, wobei der Streifen aus einem extrudierten Kunstharzmaterial hergestellt ist.

6. Kantenverkleidung nach einem der vorhergehenden Ansprüche, wobei der Streifen den Träger vollständig umschließt und wobei der Träger aus Metall hergestellt ist.

7. Kantenverkleidung nach einem der vorhergehenden Ansprüche, wobei das schwamm- oder schaumartige Material ein Aufschmelzschaum ist.

8. Kantenverkleidung nach einem der Ansprüche 1-7, wobei das Schwamm- oder schaumartige Material ein EPDM (Ethylen-Propylen-Terpolymer)-Schwamm ist.

9. Verfahren zum Anbringen einer Kantenverkleidung (1) an einem Flansch nach einem der Ansprüche 1-8, das die Schritte aufweist, den Kanal (11) der Kantenverkleidung in einen ersten, nach außen geöffneten Zustand zu formen, den Kanal (11) der Kantenverkleidung in diesem ersten Zustand einem Flansch (13) darzubieten, wie er an der Kante einer Tür oder um eine Türöffnung in einem Kraftfahrzeug zu finden ist, bis der Kanal (11) lose am Flansch (13) angreift, und anschließend die Kantenverkleidung in einen zweiten, geschlossenen Zustand zu verformen, in dem das schwamm- oder schaumartige Material auf der inneren Oberfläche derselben den Flansch (13) einklemmt.

10. Verfahren gemäß Anspruch 9, das den Schritt aufweist, die Dicke des Flansches zu fühlen und einen Verformungsschritt auf die Kantenverkleidung anzuwenden, so daß die Kantenverkleidung den Flansch ungeachtet der Dicke des Flansches über seine Länge einheitlich einklemmt.

11. Verfahren nach Anspruch 9 oder 10, wobei eine vorbestimmte Bördelkraft auf die Kantenverkleidung angewandt wird, um dieselbe ungeachtet der Dicke des Flansches in ihren zweiten Zustand zu verformen.

12. Verfahren nach einem der Ansprüche 9 bis 11, wobei die Kantenverkleidung mittels einer Mehrzahl von Bördelrollen (35,36), die auf einem Roboterarm (31) getragen werden, verformt wird.

## Revendications

1. Jonc de recouvrement d'arête (1) destiné à être appliqué sur un rebord (13), tel que l'on en trouve sur le bord d'une portière ou autour d'une baie de portière dans un véhicule automobile, comprenant une bande (5) définissant un canal (11) qui, en coupe transversale, a une forme globalement en U, mais avec les branches (7a, 7b) de la forme en U qui divergent depuis la base du U et sont inclinées l'une par rapport à l'autre en formant un angle, compris entre à peu près 10° et à peu près 90°, et un support (3) incorporé, au moins partiellement, dans la bande, caractérisé en ce qu'un matériau spongieux ou alvéolaire (9) s'étend sur sensiblement toute la surface intérieure du canal (11) et est fixé dans le canal (11), d'une manière telle qu'au moins une partie d'un rebord (13) puisse être placée à l'intérieur du canal (11) et que le jonc de recouvrement d'arête (1) puisse être ensuite serti ou déformé d'une autre façon pour venir en contact agrippant avec le rebord (13), les surfaces du rebord étant agrippées par ledit matériau spongieux ou alvéolaire (9).

2. Jonc de recouvrement d'arête selon la revendication 1, dans lequel les branches (7a, 7b) sont inclinées l'une par rapport à l'autre en formant un angle compris entre 40° et 50°.

3. Jonc de recouvrement d'arête selon la revendication 1 ou 2, dans lequel le jonc de recouvrement (1) comprend en outre, le long de chaque bord du canal, une ailette (19) qui est dimensionnée pour retenir le matériau spongieux ou alvéolaire dans le canal.

4. Jonc de recouvrement d'arête selon l'une quelconque des revendications précédentes, dans lequel le support (3) a au moins une empreinte (21) dirigée vers le canal (11).

5. Jonc de recouvrement d'arête selon l'une quelconque des revendications précédentes, dans lequel la bande est formée en une résine synthétique extrudée.

6. Jonc de recouvrement d'arête selon l'une quelconque des revendications précédentes, dans lequel la bande enveloppe complètement le support et dans lequel le support est réalisé en métal.

7. Jonc de recouvrement d'arête selon l'une quelconque des revendications précédentes, dans lequel le matériau spongieux ou alvéolaire est une mousse thermofusible.

8. Jonc de recouvrement d'arête selon l'une quelconque des revendications 1 à 7, dans lequel le matériau spongieux ou alvéolaire est une éponge EPDM.

9. Procédé d'installation sur un rebord, d'un jonc de recouvrement d'arête (1) selon l'une quelconque des revendications 1 à 8, comprenant les étapes de formage du canal (11) du jonc de recouvrement d'arête dans un premier état ouvert, de présentation du canal (11) du jonc de recouvrement d'arête dans ce premier état au rebord (13), tel que celui que l'on trouve sur le bord d'une portière ou autour d'une baie de portière dans un véhicule automobile, jusqu'à ce que le canal (11) s'adapte avec du jeu autour du rebord (13) et de déformation subséquente du jonc de recouvrement d'arête, le plaçant dans un deuxième état fermé, dans lequel le matériau spongieux ou alvéolaire, situé sur sa surface intérieure, agrippe le rebord (13).

10. Procédé selon la revendication 9, comprenant l'étape de détection de l'épaisseur du rebord et de mise en oeuvre d'une étape de déformation sur le jonc de recouvrement d'arête d'une manière telle que le jonc de recouvrement d'arête agrippe le rebord uniformément sur l'ensemble de sa longueur, quelle que soit l'épaisseur du rebord.

11. Procédé selon la revendication 9 ou 10, selon lequel une force de sertissage prédéterminée est appliquée sur le jonc de recouvrement d'arête pour le déformer jusque dans son deuxième état, indépendamment de l'épaisseur du rebord.

12. Procédé selon l'une quelconque des revendications 9 à 11, selon lequel le jonc de recouvrement d'arête est déformé au moyen de plusieurs galets de sertissage (35, 36) montés sur un bras de robot (31).
